# FASCICULE DE BREVET EUROPEEN

(11) **EP 2 108 792 B1**
(45) Date de publication et mention de la délivrance du brevet: **14.12.2011**
(21) Numéro de dépôt: 09155630.8
(22) Date de dépôt: 19.03.2009
(51) Int. Cl.: F01N 3/20, F01N 11/00

(54) **Procédé d'évaluation de risque de désorption d'ammoniac stocké dans un catalyseur SCR**
Verfahren zur Risikobewertung der Desorption von in einem SCR-Katalysator gespeichertem Ammoniak
Method for assessing the risk of desorption of ammonia stored in an SCR catalyst

(30) Priorité: 08.04.2008 FR 0852322
(43) Date de publication de la demande: 14.10.2009
(73) Titulaire: PEUGEOT CITROËN AUTOMOBILES S.A., 78140 Velizy Villacoublay (FR)
(72) Inventeur: Charial, Christophe, 92500, Rueil-Malmaison (FR)
(74) Mandataire: Ménès, Catherine

(56) Documents cités:
- EP-A- 0 898 061
- EP-A- 1 712 764
- US-A1- 2007 125 071

## Description

La présente invention se situe dans le domaine du traitement des gaz d'échappement de véhicules automobiles.

De manière plus précise, cette invention se situe dans le domaine des systèmes à réduction catalytique sélective, dits SCR, comprenant un catalyseur SCR, siège d'une ou plusieurs réactions chimiques de réduction, par l'ammoniac, des oxydes d'azote émis dans les gaz d'échappement. De tels systèmes de traitement permettent de traiter les gaz d'échappement de manière à ce que les véhicules respectent les niveaux d'émission d'oxydes d'azote légalement tolérés, qui sont de plus en plus bas.

Le principe d'alimentation en ammoniac des systèmes classiques de post-traitement d'oxydes d'azote est le suivant :
- on injecte l'ammoniac dans la ligne d'échappement en amont du catalyseur, cette injection étant effectuée, par exemple, sous forme d'une solution d'urée liquide,
- en fonction de la configuration du système, une partie plus ou moins importante de cet ammoniac est stockée dans le catalyseur pour une utilisation ultérieure, et l'autre partie de l'ammoniac est utilisée directement pour réduire les oxydes d'azote échappés du moteur.

Les réglementations en matière de gaz d'échappement de véhicules automobiles sont très strictes, et ne concernent pas uniquement les rejets d'oxydes d'azote dans l'atmosphère, mais également les rejets d'ammoniac. En effet, l'ammoniac est un gaz à la fois nocif et malodorant, et il est donc dangereux et inconvenant que des quantités trop importantes de ce gaz soient émises à proximité d'un véhicule.

On connait de la demande de brevet EP1712764 une méthode d'estimation du risque de désorption de l'ammoniac basée sur l'évaluation de la température du catalyseur SCR, et en fonction de celle-ci, la capacité d'absorption d'ammoniac et la quantité d'ammoniac stockée.

Afin de respecter ces exigences légales, les constructeurs automobiles ont développé de nombreux procédés permettant de contrôler l'injection de l'ammoniac dans les systèmes de post-traitement des gaz, de façon que cette injection soit effectuée dans une mesure suffisante pour réduire les oxydes d'azote, tout en étant limitée pour ne pas risquer de fuite d'ammoniac dans l'atmosphère. Ces procédés prennent en compte, par exemple, des paramètres véhicule, des paramètres environnementaux, ou encore de la capacité de stockage du catalyseur.

Les catalyseurs utilisés dans ce type de systèmes sont, généralement, des dispositifs comprenant des micropores, ou des pores, dans lesquels les gaz à stocker, par exemple l'ammoniac, sont adsorbés. Toutefois, on a constaté que, sous l'effet d'une température élevée, il se produit une désorption de l'ammoniac, conduisant ainsi à un rejet intempestif d'ammoniac pur dans l'atmosphère, à des niveaux pouvant dépasser les exigences réglementaires en la matière. Or, jusqu'à présent, dans les systèmes et procédés existants, ce phénomène de désorption n'est pas pris en compte dans la détermination de la quantité d'ammoniac injectée dans le système.

Partant de cette constatation, l'invention vise donc à proposer un procédé permettant d'évaluer les risques de désorption au niveau d'un catalyseur, ceci afin de prévenir toute fuite.

L'invention concerne ainsi un procédé d'évaluation de risque de désorption d'ammoniac adsorbé dans un catalyseur, destiné à être le siège de réactions chimiques de réduction catalytique sélective, le procédé comprenant les étapes suivantes :
- on détermine une température à l'intérieur du catalyseur,
- en fonction de cette température, on détermine un facteur de risque statique de désorption,
- on détermine une évolution de la température à l'intérieur du catalyseur,
- en fonction de cette température, on détermine un facteur de risque dynamique de désorption,
- on ajoute le facteur de risque statique et le facteur de risque dynamique pour obtenir un potentiel de désorption d'ammoniac, auquel on associe un niveau de risque.

Dans une réalisation particulière de l'invention, la détermination du facteur de risque statique est effectuée de la façon suivante :
- si la température du catalyseur est inférieure à une valeur de température prédéterminée, le facteur de risque statique est égal à 0, et
- si la température du catalyseur est supérieure ou égale à la valeur déterminée, le facteur de risque statique est égal à 1.

De manière préférentielle, la valeur de température prédéterminée est égale à 180°C.

Dans une autre réalisation particulière de l'invention, la détermination de l'évolution de la température est effectuée en mémorisant la valeur de la température en plusieurs instants de mesure successifs, la fréquence des instants étant fonction d'un débit de gaz circulant dans le catalyseur.

Selon un mode de réalisation, pour déterminer le facteur de risque dynamique, on détermine un gradient d'évolution de la température,
- si ce gradient est inférieur à une valeur de gradient prédéterminée, le facteur de risque dynamique est égal à 0, et
- si ce gradient est supérieur à cette valeur prédéterminée, le facteur de risque dynamique est égal à 1.

De manière préférentielle, la valeur de gradient prédéterminée est égale à zéro.

Plus précisément, dans une réalisation de l'invention, le potentiel de désorption est égal à :
- 0, correspondant à un risque faible,
- 1, correspondant à un risque moyen,
- 2, correspondant à un risque élevé.

L'invention concerne également un procédé d'injection d'ammoniac en amont d'un catalyseur siège d'une réduction catalytique sélective, destiné à être installé dans un système de traitement des gaz d'échappement installé dans un véhicule automobile, le traitement consistant en la réduction catalytique sélective, dans le catalyseur, des oxydes d'azote contenus dans les gaz d'échappement par l'agent réducteur stocké dans un réservoir et injecté dans la ligne d'échappement, le procédé comprenant les étapes suivantes :
- on injecte une quantité d'ammoniac initiale, déterminée en fonction d'une quantité et d'une nature des gaz d'échappement émis en sortie du moteur du véhicule, une partie de cette ammoniac étant directement stockée dans le catalyseur,
- on met en oeuvre un procédé d'évaluation conforme à l'invention, pour déterminer un niveau de risque de désorption, et
- en fonction du niveau de risque déterminé, on adapte d'injection d'ammoniac.

Dans un mode de réalisation particulier de ce procédé d'injection, dans lequel le potentiel de risque déterminé a une valeur de 0, 1 ou 2, l'adaptation de l'injection est effectuée de la façon suivante :
- si le niveau de risque est faible, on maintient l'injection,
- si le niveau de risque est moyen, on diminue la quantité d'ammoniac injecté, et
- si le niveau de risque est élevé, on stoppe l'injection d'ammoniac.

D'autres caractéristiques et avantages de l'invention apparaîtront avec la description détaillée de certains modes de réalisation, cette description étant effectuée à titre non limitatif à l'aide des figures sur lesquelles :
- les figures 1a et 1b représentent l'architecture fonctionnelle d'une stratégie de pilotage SCR dans un véhicule automobile,
- la figure 2 représente l'évolution de la température dans un catalyseur de type SCR, déterminée dans le cadre d'un procédé d'évaluation conforme à l'invention, et
- la figure 3 représente le calcul d'un potentiel de désorption selon un procédé d'évaluation conforme à l'invention.

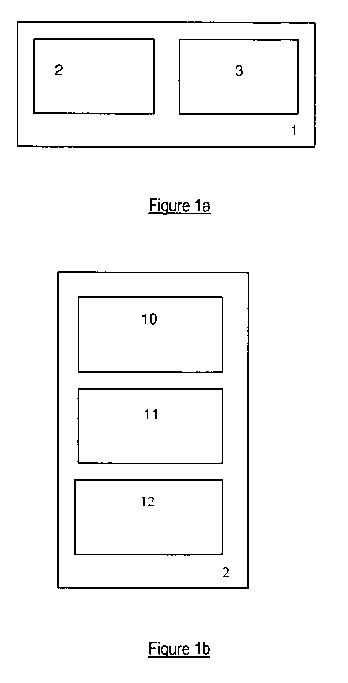

La figure 1 montre l'architecture fonctionnelle d'un module 1 de mise en oeuvre de la stratégie de pilotage SCR dans un véhicule automobile. Cette architecture est décrite ci-après dans le cas d'un système utilisant, en tant qu'agent réducteur, de l'ammoniac sous forme d'une solution aqueuse d'urée. Toutefois, cette architecture ne se limite aucunement à ce cas particulier, et peut être adaptée à tout autre agent réducteur.

Dans la suite de la description, les termes «agent réducteur» et «ammoniac» sont indifféremment utilisés, en sachant que, dans tous les cas, l'ensemble des moyens et caractéristiques ici décrits peuvent être utilisés avec tout autre agent réducteur.

Une telle stratégie est, généralement, mise en oeuvre par un calculateur spécifique installé à cet effet dans le véhicule automobile, ou par un calculateur existant au préalable, tel que le calculateur moteur.

Au niveau fonctionnel, le module 1 de mise en oeuvre globale de la stratégie de pilotage peut être séparé en deux modules complémentaires : un module 2 de pilotage de l'injection d'urée, et un module 3 de contrôle de l'urée embarquée.

Le module 2 de pilotage de l'injection d'urée est utilisé pour déterminer la quantité d'urée à injecter dans l'échappement à chaque instant. Cette détermination est effectuée à partir de l'ensemble des informations fournies par le module 3 de contrôle de l'urée embarquée, et qui seront détaillées par la suite.

Ce module 3 est chargé d'assurer l'injection et, dans ce cadre, de gérer le réservoir d'urée. Parmi les fonctionnalités de ce module, on peut citer celle permettant de réchauffer l'urée en cas de gel.

De manière plus précise, ce module 3 de contrôle comporte lui-même trois sous-modules, à savoir :
- un module 10 de diagnostic embarqué,
- un module 11 de calcul de la quantité nécessaire d'urée à injecter, et
- un module 12 de contrôle en boucle fermée de la quantité d'urée à injecter.

Le module 10 est un module permettant de vérifier, en temps réel, l'état de fonctionnement du système de traitement.

Le module 11 détermine à chaque instant la quantité d'urée qu'il est nécessaire d'injecter dans l'échappement pour obtenir une réduction des oxydes d'azote la plus efficace possible. Ce calcul est effectué à partir de paramètres relatifs au moteur, tels que le régime ou le couple, ou relatifs à l'échappement, tels que la température du catalyseur, ou le rapport entre la quantité de monoxyde d'azote et de dioxyde d'azote dans les gaz d'échappement. Ce calcul a pour but d'optimiser l'efficacité de conversion des oxydes d'azote émis en sortie du moteur, tout en maintenant les émissions d'ammoniac en dessous des seuils réglementaires.

Le module 12, quant à lui, vient éventuellement corriger la quantité d'urée déterminée par le module 11. La présente invention, qui vise à proposer un procédé d'évaluation de risque de désorption, est destinée à être intégrée dans ce module 12.

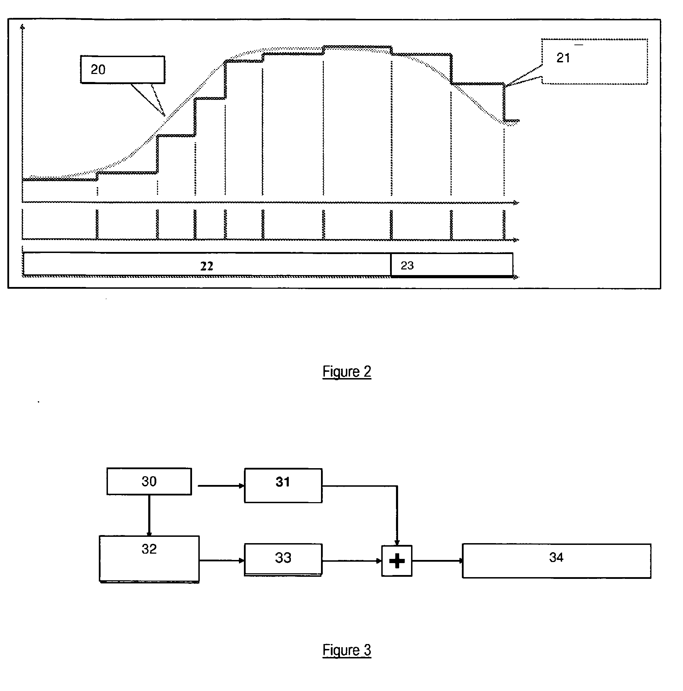

On va maintenant décrire, à l'aide des figures 2 et 3, le calcul d'un potentiel de désorption d'ammoniac, dans le cadre de la mise en oeuvre d'un procédé selon l'invention.

Dans un système de traitement d'oxydes d'azote, on injecte l'agent réducteur en amont du catalyseur SCR, dans la ligne d'échappement. En fonction du régime moteur du véhicule, la température des gaz d'échappement varie, et la température à l'intérieur du catalyseur varie donc de la même façon.

Cette température est mesurée, dans le cadre d'un procédé selon l'invention, par un capteur de température installé au niveau du catalyseur. Cette température est représentée sur le graphe de la figure 2 par la courbe 20.

Le graphe de température, montré en figure 2, correspond au bloc d'entrée 30 sur le schéma fonctionnel de la figure 3.

Ainsi que décrit précédemment, le calcul d'un potentiel de désorption de l'ammoniac dans un catalyseur est effectué en additionnant un facteur de risque statique de désorption et un facteur de risque dynamique de désorption.

Le facteur de risque statique 31 est déterminé en comparant la valeur de la température 30 à un instant donné avec une valeur de température prédéterminée en fonction des caractéristiques du catalyseur.

Cette température prédéterminée est, par exemple, égale à 180°C.

Le facteur de risque 33 est, quant à lui, déterminé en fonction de l'évolution de la température dans le catalyseur, de la façon suivante :
- on mémorise la valeur de la température 30 à différents instants, à une fréquence déterminée qui varie en fonction du débit des gaz d'échappement, selon le même sens de variation. En effet, lorsque le débit des gaz est important, cela signifie qu'une variation de la température des gaz en sortie du moteur se répercute plus rapidement sur la température du catalyseur. Par conséquent, pour refléter de manière relativement précise cette évolution, il est nécessaire de relever la température plus fréquemment.
- à partir de ces valeurs mémorisées, on détermine un gradient de température 32, et
- on compare ce gradient de température à une valeur prédéterminée, le facteur de risque 33 dépendant du résultat de la comparaison.

De manière préférentielle, la valeur de gradient prédéterminée est égale à 0. En effet, lorsque le gradient de température est positif, comme dans la zone 22 montrée en figure 2, cela signifie que la température augmente, et que le risque de voir de l'ammoniac se désorber augmente également.

En revanche, si le gradient de température est négatif, comme dans la zone 23, la température diminue, et le risque d'assister à une désorption d'ammoniac se réduit.

Dans une réalisation particulière, le facteur de risque statique 31 vaut 0 s'il n'y a pas de risque, c'est à dire si la température est suffisamment basse, et 1 dans le cas contraire.

De la même façon, le facteur de risque dynamique 33 vaut 0 lorsque le gradient de température est faible, par exemple négatif, et vaut 1 dans les autres cas.

Ainsi le potentiel de désorption 34, qui correspond à la somme de ces deux facteurs de risque, a une valeur comprise dans le groupe comprenant 0, 1 ou 2.

Si le potentiel de désorption est égal à 0, cela signifie que les deux facteurs de risque sont nuls, et on peut donc considérer que le risque est faible.

Si le potentiel de désorption est égal à 1, c'est à dire si l'un des facteurs de risque est activé, on peut considérer que le niveau de risque est devenu moyen.

En revanche, si le potentiel de désorption est égal à 2, cela signifie que les deux facteurs de risque sont actifs, et on peut donc considérer que le risque d'assister à une désorption d'ammoniac est élevé.

## Revendications

1. Procédé d'évaluation de risque de désorption d'ammoniac adsorbé dans un catalyseur, destiné à être le siège de réactions chimiques de réduction catalytique sélective, le procédé comprenant les étapes suivantes :
• on détermine une température (30) à l'intérieur du catalyseur,
• en fonction de cette température (30), on détermine un facteur de risque statique (31) de désorption,
• on détermine une évolution (32) de la température à l'intérieur du catalyseur,
• en fonction de cette évolution de la température, on détermine un facteur de risque dynamique (33) de désorption,
• on ajoute le facteur de risque statique (31) et le facteur de risque dynamique (33) pour obtenir un potentiel (34) de désorption d'ammoniac, auquel on associe un niveau de risque.

2. Procédé selon la revendication 1, dans lequel la détermination du facteur de risque statique est effectuée de la façon suivante :
• si la température du catalyseur est inférieure à une valeur de température prédéterminée, le facteur de risque statique (31) est égal à 0, et
• si la température du catalyseur est supérieure ou égale à la valeur déterminée, le facteur de risque statique (31) est égal à 1.

3. Procédé selon la revendication 2, dans lequel la valeur de température prédéterminée est égale à 180°C.

4. Procédé selon l'une des revendications précédentes, dans lequel la détermination de l'évolution de la température est effectuée en mémorisant la valeur de la température en plusieurs instants de mesure successifs, la fréquence des instants étant fonction d'un débit de gaz circulant dans le catalyseur.

5. Procédé selon l'une des revendications précédentes, dans lequel pour déterminer le facteur de risque dynamique, on détermine un gradient d'évolution de la température, et
• si ce gradient est inférieur à une valeur de gradient prédéterminée, le facteur de risque dynamique (33) est égal à 0, et
• si ce gradient est supérieur à cette valeur prédéterminée, le facteur de risque dynamique (33) est égal à 1.

6. Procédé selon la revendication 5, dans lequel la valeur de gradient prédéterminée est égale à zéro.

7. Procédé selon l'une des revendications précédentes, dans lequel le potentiel de désorption est égal à :
• 0, correspondant à un risque faible,
• 1, correspondant à un risque moyen,
• 2, correspondant à un risque élevé.

8. Procédé d'injection d'ammoniac en amont d'un catalyseur à siège d'une réduction catalytique sélective, destiné à être installé dans un système de traitement des gaz d'échappement installé dans un véhicule automobile, le traitement consistant en la réduction catalytique sélective, dans le catalyseur, des oxydes d'azote contenus dans les gaz d'échappement par l'agent réducteur stocké dans un réservoir et injecté dans la ligne d'échappement, le procédé comprenant les étapes suivantes :
• on injecte une quantité d'ammoniac initiale, déterminée en fonction d'une quantité et d'une nature des gaz d'échappement émis en sortie du moteur du véhicule, une partie de cette ammoniac étant directement stockée dans le catalyseur,
• on met en oeuvre un procédé selon l'une des revendications 1 à 7, pour déterminer un niveau de risque de désorption, et
• en fonction du niveau de risque déterminé, on adapte d'injection d'ammoniac.

9. Procédé d'injection selon la revendication 8, dans lequel on met en oeuvre un procédé selon la revendication 7, l'adaptation de l'injection étant effectuée de la façon suivante :
• si le niveau de risque est faible, on maintient l'injection,
• si le niveau de risque est moyen, on diminue la quantité d'ammoniac injecté, et
• si le niveau de risque est élevé, on stoppe l'injection d'ammoniac.

## Claims

1. Method for assessing the risk of desorption of ammonia adsorbed in a catalyst which is to be the site of selective catalytic reduction chemical reactions, said method comprising the following steps:
• determining a temperature (30) inside the catalyst,
• determining, as a function of said temperature (30), a static desorption risk factor (31),
• determining a development (32) of the temperature inside the catalyst,
• determining, as a function of said temperature development, a dynamic desorption risk factor (33),
• adding the static risk factor (31) and the dynamic risk factor (33) to obtain an ammonia desorption potential (34), with which a risk level is associated.

2. Method according to claim 1, in which the static risk factor is determined in the following manner:
• if the temperature of the catalyst is lower than a predetermined temperature value, the static risk factor (31) is equal to 0, and
• if the temperature of the catalyst is greater than or equal to the determined value, the static risk factor (31) is equal to 1.

3. Method according to claim 2, wherein the predetermined temperature value is equal to 180 °C.

4. Method according to any one of the preceding claims, wherein the development of temperature is determined by storing the temperature value at a number of successive measurement moments, the frequency of the moments being a function of a gas flow rate circulating in the catalyst.

5. Method according to any one of the preceding claims, wherein, in order to determine the dynamic risk factor, a gradient of temperature development is determined and
• if this gradient is less than a predetermined gradient value, the dynamic risk factor (33) is equal to 0 and
• if this gradient is greater than said predetermined value, the dynamic risk factor (33) is equal to 1.

6. Method according to claim 5, wherein the predetermined gradient value is equal to 0.

7. Method according to any one of the preceding claims, wherein the desorption potential is equal to:
• 0, corresponding to a low risk,
• 1, corresponding to a medium risk,
• 2, corresponding to a high risk.

8. Method for injecting ammonia upstream of a catalyst which is the site of selective catalytic reduction, for installation in an exhaust gas treatment system installed in a motor vehicle, the treatment consisting in the selective catalytic reduction, in the catalyst, of nitrogen oxides contained in the exhaust gases by the reducing agent stored in a container and injected into the exhaust line, the method comprising the following steps:
• injecting an initial amount of ammonia, determined as a function of an amount and nature of the exhaust gases emitted at the outlet of the motor vehicle, some of said ammonia being stored directly in the catalyst,
• implementing a method according to any one of claims 1 to 7 to determine a desorption risk level, and
• adapting the injection of ammonia as a function of the determined risk level.

9. Injection method according to claim 8, wherein a method according to claim 7 is implemented, the injection being adapted in the following manner:
• if the risk level is low, injection is maintained,
• if the risk level is medium, the amount of ammonia injected is reduced, and
• if the risk level is high, ammonia injection is ceased.

## Patentansprüche

1. Verfahren zur Abschätzung des Risikos der Desorption von in einem Katalysator adsorbiertem Ammoniak, dafür vorgesehen, der Ort von chemischen Reaktionen der selektiven katalytischen Reduktion zu sein, wobei das Verfahren folgende Schritte umfasst:
• es wird eine Temperatur (30) im Innern des Katalysators bestimmt,
• in Abhängigkeit dieser Temperatur (30) wird ein Faktor für das statische Risiko (31) der Desorption bestimmt,
• es wird eine Entwicklung (32) der Temperatur im Innern des Katalysators bestimmt,
• in Abhängigkeit dieser Entwicklung der Temperatur (30) wird ein Faktor für das dynamische Risiko (33) der Desorption bestimmt,
• der Faktor für das statische Risiko (31) und der Faktor für das dynamische Risiko (33) werden hinzugefügt, um ein Potential (34) für die Desorption von Ammoniak zu erhalten, dem ein Risikograd zugeordnet wird.

2. Verfahren nach Anspruch 1, wobei die Bestimmung des Faktors für das statische Risiko folgendermaßen erfolgt:
• wenn die Temperatur des Katalysators niedriger ist als ein vorab festgelegter Temperaturwert, ist der Faktor für das statische Risiko (31) gleich 0, und
• wenn die Temperatur des Katalysators gleich oder höher ist als der vorab festgelegte Temperaturwert, ist der Faktor für das statische Risiko (31) gleich 1.

3. Verfahren nach Anspruch 2, wobei der vorab festgelegte Temperaturwert gleich 180 °C ist.

4. Verfahren nach einem der vorhergehenden Ansprüche, wobei die Bestimmung der Entwicklung der Temperatur erfolgt, indem der Wert der Temperatur zu verschiedenen aufeinander folgenden Zeitpunkten der Messung gespeichert wird, wobei die Häufigkeit der Zeitpunkte eine Funktion einer Gasmenge ist, die in dem Katalysator zirkuliert.

5. Verfahren nach einem der vorhergehenden Ansprüche, wobei zur Bestimmung des Faktors für das dynamische Risiko ein Gradient der Temperaturentwicklung bestimmt wird und,
• wenn dieser Gradient niedriger als ein vorab festgelegter Gradientenwert ist, der Faktor für das dynamische Risiko (33) gleich 0 ist, und
• wenn dieser Gradient höher als der vorab festgelegte Gradientenwert ist, der Faktor für das dynamische Risiko (33) gleich 1 ist.

6. Verfahren nach Anspruch 5, wobei der vorab festgelegte Gradientenwert gleich Null ist.

7. Verfahren nach einem der vorhergehenden Ansprüche, wobei das Desorptionspotential gleich
• 0 ist, was einem geringen Risiko entspricht,
• 1 ist, was einem mittelmäßigen Risiko entspricht,
• 2 ist, was einem hohen Risiko entspricht.

8. Verfahren zur Einspritzung von Ammoniak vor einem Katalysator mit Ort einer selektiven katalytischen Reduktion, vorgesehen für die Installation in einem System zur Aufbereitung der Abgase, das in einem Kraftfahrzeug installiert ist, wobei die Aufbereitung in der selektiven katalytischen Reduktion, in dem Katalysator, der in den Abgasen enthaltenen Stickstoffoxide durch das Reduktionsmittel, das in einem Behälter gespeichert und in die Abgasstrecke eingespritzt wird, besteht, wobei das Verfahren folgende Schritte umfasst:
• Einspritzen einer anfänglichen Menge von Ammoniak, die in Abhängigkeit von einer Menge und einer Beschaffenheit der Abgase, die am Ausgang des Fahrzeugmotors emittiert werden, bestimmt wird, wobei ein Teil dieses Ammoniaks direkt in dem Katalysator gespeichert wird,
• Verwendung eines Verfahrens nach einem der Ansprüche 1 bis 7, um den Grad des Risikos der Desorption zu bestimmen, und
• Anpassung der Einspritzung von Ammoniak in Abhängigkeit des bestimmten Risikogrades.

9. Einspritzverfahren nach Anspruch 8, wobei ein Verfahren nach Anspruch 7 verwendet wird, wobei die Anpassung der Einspritzung folgendermaßen erfolgt:
• wenn das Risiko gering ist, wird die Einspritzung aufrechterhalten,
• wenn das Risiko mittelmäßig ist, wird die Menge an eingespritztem Ammoniak verringert, und
• wenn das Risiko hoch ist, wird die Einspritzung gestoppt.
